# FASCICULE DE BREVET EUROPEEN

(11) **EP 2 791 538 B1**
(45) Date de publication et mention de la délivrance du brevet: **29.03.2017**
(21) Numéro de dépôt: 12808349.0
(22) Date de dépôt: 14.12.2012
(51) Int. Cl.: F16D 65/097, F16D 55/226

(54) **GLISSIERE DE PATIN DE FREIN DISQUE ET FREIN DISQUE EQUIPE D'UNE TELLE GLISSIERE**
SCHEIBENBREMSBELAGFÜHRUNG UND SCHEIBENBREMSE MIT EINER DERARTIGEN FÜHRUNG
DISC BRAKE PAD GUIDEWAY AND DISC BRAKE EQUIPPED WITH SUCH A GUIDEWAY

(30) Priorité: 15.12.2011 FR 1103908
(43) Date de publication de la demande: 22.10.2014
(73) Titulaire: Robert Bosch GmbH, 70442 Stuttgart (DE)
(72) Inventeur: MAHOUDEAUX, Roger, 93150 Le Blanc Mesnil (FR)
(86) Numéro de dépôt international: PCT/EP2012/075592
(87) Numéro de publication internationale: WO 2013/087862

(56) Documents cités:
- JP-A- 2009 209 961
- US-A1- 2007 251 772
- US-A1- 2009 277 729
- US-B1- 6 223 866

## Description

### Domaine de l'invention.

L'invention concerne une glissière formée par une tôle pliée et un ressort issue de cette glissière pour un frein à disque de véhicule automobile qui comporte au moins un patin de frein qui est monté coulissant axialement dans une chape et les freins à disque équipés d'une glissière.

### Etat de la technique.

Dans un véhicule équipé de freins à disques, chaque roue à freiner comporte un disque de frein solidaire de la roue et des patins de frein solidaires du châssis du véhicule qui viennent par friction freiner le disque. Le frein comporte un étrier avec une chape ayant de chaque côté du disque de frein une branche en U portant un patin de frein et chaque patin est mobile perpendiculairement au plan du disque, guidé par ses deux extrémités (oreilles) dans des logements des bras de la chape.

Lors d'un freinage, les patins sont entraînés selon la direction tangentielle au disque et les oreilles viennent buter, parfois brutalement, contre le fond de leur logement de guidage provoquant un bruit appelé « klonk » ou claquement. Pour amortir le choc des oreilles dans leur logement et ainsi atténuer le bruit, il est prévu, une glissière entre chaque oreille et son logement et l'amortissement est obtenu par la déformation d'un ressort formé par une aile de la glissière dont la forme est adaptée à la force exercée par le patin de frein lors de son déplacement tangentiel.

Il existe des frein à disque de véhicule automobile qui comporte au moins un patin de frein qui est monté coulissant par rapport à un disque de frein selon un axe de coulissement d'orientation axiale dans au moins une glissière entre une position avant de freinage dans laquelle une face de friction du patin de frein ou plaquette de frein est susceptible d'être serrée contre une face du disque et une position arrière de repos dans laquelle la face de friction du patin de frein est éloignée de la face du disque. Un étrier qui comporte au moins un élément de serrage du patin de frein qui est susceptible de solliciter axialement le patin de frein vers sa position de freinage; dans lequel la glissière qui est fixée à une chape fixe et comporte une aile déformable élastiquement, comportant une face de guidage et une zone de contact avec le patin de frein exerçant un effort élastique constant. Il est connu de proposer des freins à disque du type de celui décrit précédemment, dans lesquels chaque glissière est réalisée tôle plié formant également un ressort à lame qui est fixé à la chape d'un étrier associé, donc ces glissières combinent aussi une fonction ressort. Ces freins à disque sont plus silencieux que les freins conventionnels. En effet, les glissières et les ressorts à lames généralement réalisées en tôle d'inox sont destinées à réduire les vibrations qui existent entre le patin de frein et la chape en permettant une certaine liberté de déplacement du patin de frein par rapport à la chape et en permettant aussi de réduire le coefficient friction entre le patin et la chape par des état de surface amélioré. Les patins de frein sont généralement montés coulissants librement dans les glissières associées. La maitrise des coefficients de friction et des efforts appliqués par le ressort à lame sur le patin permettent également de maitrisé les efforts de coulissement et le guidage du patin et de pouvoir gérer la caractéristique du frein a disque en matière de couple résiduel et d'absorption
Ainsi, ils sont sollicités contre le disque par un élément de serrage de l'étrier et ils sont repoussés en sens inverse vers leur position de repos par le frottement du disque lorsque l'élément de serrage est revenu dans sa position de repos. Un exemple de ces glissières parmi d'autres est divulgué dans le document WO 2001/031223 A1.
Cependant, il arrive que le patin frottant contre le disque entre en vibration ce qui produit un bruit désagréable et ça malgré l'effet ressort de la glissière.

### But de l'invention.

La présente invention a pour but de d'offrir une glissière économique capable d'offrir des capacités d'amortissements augmentées afin de réduire les bruits dues aux vibrations tous en garantissant un bon coulissement du patin et un frein à disque équipé de tels glissières.

### Exposé et avantages de l'invention.

A cet effet, l'invention concerne une glissière du type défini par un corps à section en forme de U sensiblement rectangulaire pour se placer dans un logement et se poursuivant par, une surface d'appui avant venant contre la surface avant d'un plot et portant deux languettes pour former des butées latérales venant de part et d'autre du plot, et un ressort amortisseur formé par une aile en épingle à cheveux revenant vers l'avant pour s'appuyer élastiquement contre le côté d'un patin au-dessus d'une oreille, et par une surface d'appui avant intérieure venant contre une surface intérieure du bras et recevant une face du patin sous l'oreille, le corps ayant une surface radiale extérieure venant contre une surface supérieure du logement, suivi d'un fond venant contre le fond du logement et une surface radiale intérieure munie d'une languette de verrouillage pour s'appuyer et s'accrocher contre une surface inférieur du logement.

L'organe de guidage selon l'invention est parfaitement fixé au bras de la chape à la fois par son maintien sur le plot et son accrochage par la languette de verrouillage dans le logement du bras. La forme en U du corps de l'organe de guidage offre un bon contact de guidage au ressort auxiliaire ou ressort radial équipant chaque oreille du patin et favorisant non seulement la sensibilité du mouvement de freinage, mais surtout le dégagement du patin par rapport à la surface du disque à la fin du freinage pour éviter tout contact résiduel, source de pertes par frottement.
Pour résoudre ce problème, l'invention a pour objet une glissière pour frein à disque du type décrit précédemment, comportant des moyens d'amortissements élastiques sur toutes la face de la glissière susceptible d'être en contacte avec une chape et réalisée dans une tôle recouverte du dit moyen d'amortissement sur une seule de ses faces caractérisé en ce que la face amortissante comporte des zones contactes avec la chape et la glissière et que la dite glissière comporte une aile élastique en contact avec le patin et possède un repli de manière a ce que face amortissante soit opposé a une zone d'appui sur le patin. Ce repli sur l'aile élastique permet à la matière servant de moyen amortissant de ne pas ce retrouver en contacte avec le patin et donc que le coefficient de friction entre le patin et la glissière soit sensiblement égal sur toute les zones de contactes entre le patin et la glissière, les coefficients de friction patin/matière amortissante étant généralement supérieur aux coefficients de friction patin/tôle d'inox.

Selon d'autres caractéristiques de l'invention :
La zone de contact de l'aile élastique de la glissière possède une forme arrondie pour l'amélioration des frottements entre le patin et la dite aile. Cette forme arrondie possédant avantageusement un rayon compris entre 0.5mm et 15mm et de manière encore plus avantageuse un rayon compris entre 1 mm et 5mm.

Les moyens d'amortissements élastiques sont avantageusement réalisés en matière élastomère.

Les moyens d'amortissements élastiques sont avantageusement réalisés en matière élastomère d'épaisseur comprise entre 0.3mm et 1 mm.

Une autre caractéristique avantageuse, est que la glissière est réalisée de manière préférentielle dans une tôle d'acier inox

Une autre caractéristique avantageuse, est que la partie métallique de la glissière est réalisée de manière préférentielle dans une tôle d'acier inox d'épaisseur compris entre 0.3mm et 1 mm.

Une autre caractéristique avantageuse, est que la glissière est fixée à la chape fixe par des moyens de fixation élastique par emboîtement de formes complémentaires et deux ailes situées de part et d'autre de lame élastique. Ces moyens assurant le positionnement et le maintien de la glissière sur la chape.

L'invention a également pour objet un frein à disque du type décrit précédemment, équipé d'au moins une glissière en contacte avec la chape et réalisé dans une tôle recouverte d'un moyen d'amortissement sur une seule de ses faces caractérisé en ce que la face amortissante de la glissière comporte des zone contacte avec la chape et la glissière et que la dite glissière comporte une aile élastique en contact avec le patin et possède un repli de manière a ce que face amortissante soit opposé a une zone d'appui sur le patin.

D'autres caractéristiques et avantages apparaîtront au cours de la lecture de la description détaillée qui va suivre pour la compréhension de laquelle on se reportera aux dessins annexés parmi lesquels:

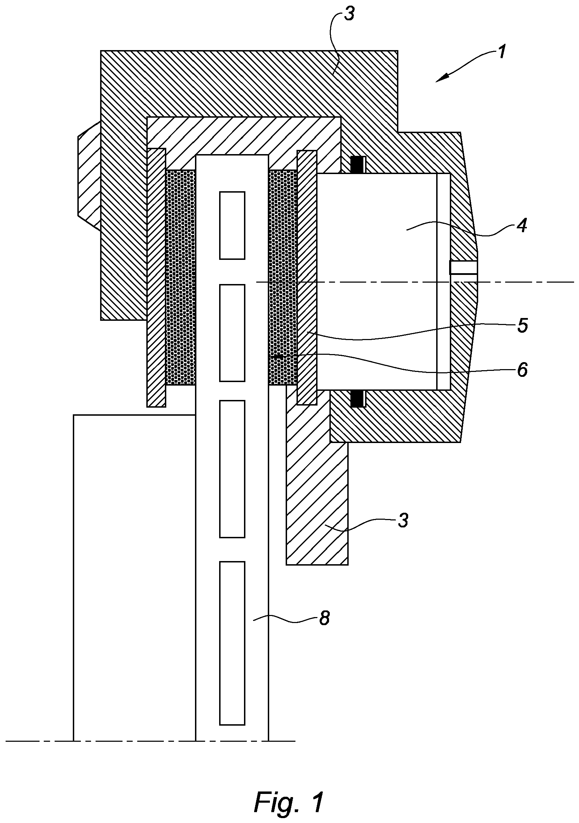

La figure 1 est une vue en coupe qui représente un frein à disque selon l'invention.

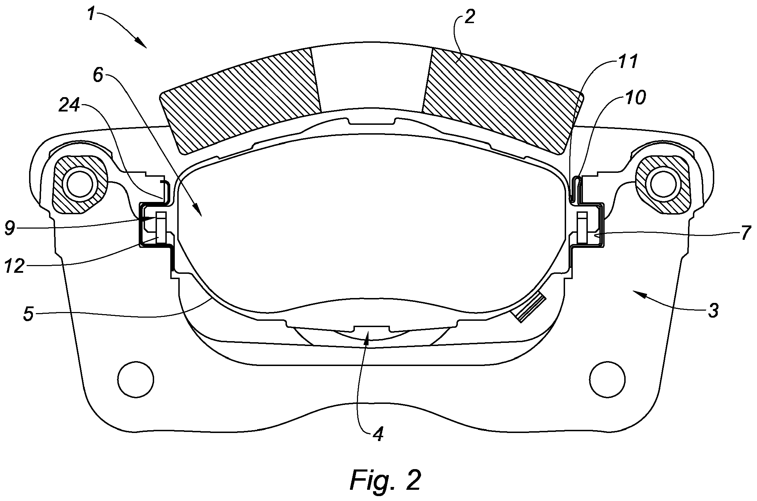

La figure 2 est une vue en coupe qui représente un frein à disque selon l'invention.

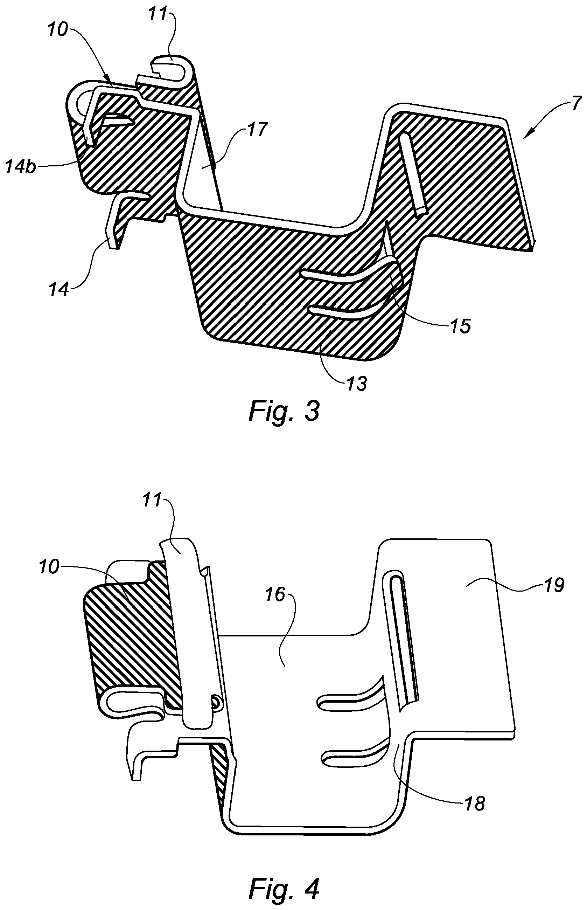

La figure 3 est une vue isométrique de la glissière selon l'invention.
La figure 4 est une vue isométrique de la glissière selon l'invention suivant un autre axe.

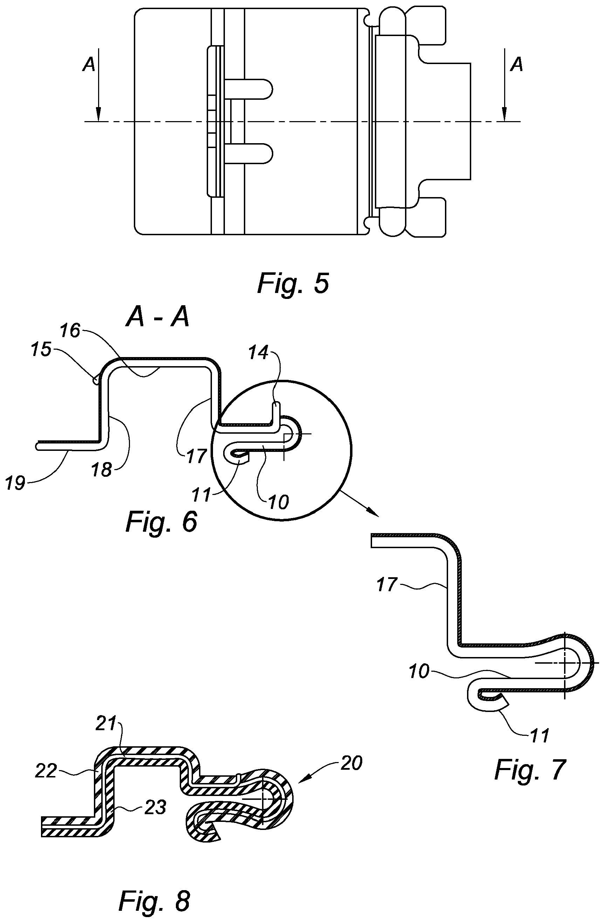

La figure 5 est une vue de la glissière selon l'invention
La figure 6 est une vue en coupe suivant AA de la glissière selon l'invention suivant un autre axe
La figure 7 est une vue agrandie de la glissière montrer dans la figure 6 selon l'invention.
La figure 8 est une vue de la glissière selon l'invention et selon un autre moyen de réalisation.

Pour des raisons économiques ces glissières sont fabriquées par découpage et pliage dans des tôles recouvert d'un moyen d'amortissement sur une seule face, formant deux couches. La face où ce trouve ce moyen d'amortissement possède en générale un coefficient de friction plus élevé que la face de la tôle qui n'est pas recouverte. Donc, il est important que toutes les parties de la glissière en contacte avec le patin est le même coefficient de friction pour ne pas créer de mise en biais du patin lors de son coulissement dans la phase de desserrage.

L'invention a pour objet plus particulièrement une glissière pour un frein à disque 1 de véhicule automobile qui comporte au moins un patin 5 de frein qui est monté coulissant dans au moins une glissière 7 par rapport à un disque 8 de frein selon un axe de coulissement d'orientation axiale entre une position avant de freinage dans laquelle une face de friction 6 du patin 5 de frein est susceptible d'être serrée contre une face du disque 8 et une position arrière de repos dans laquelle la face de friction du patin de frein est éloignée de la face du disque. Un étrier 2 qui comporte au moins un élément de serrage 4 du patin 5 de frein qui est susceptible de solliciter axialement le patin de frein vers sa position de freinage; du type dans lequel la glissière 7 qui est fixée à une chape fixe 3.

Cette glissière du type défini par un corps à section en forme de U sensiblement rectangulaire pour se placer dans le logement et se poursuivant par, une surface d'appui avant venant contre une surface avant d'un plot 24 de la chape 3 et portant deux languettes 14 et 14 b pour former des butées latérales venant de part et d'autre du plot, et un ressort amortisseur 10 formé par une aile en épingle à cheveux revenant vers l'avant pour s'appuyer élastiquement contre le côté du patin 5 au-dessus de l'oreille 9, et par une surface d'appui avant intérieure venant contre une surface intérieure du bras et recevant une face du patin sous l'oreille, le corps ayant une surface radiale extérieure venant contre une surface supérieure du logement, suivi d'un fond 16 venant contre un fond du logement et une surface radiale intérieure munie d'une languette 15 de verrouillage pour s'appuyer et s'accrocher contre une surface inférieur du logement. comportant l'aile élastiquement déformable 10 et un repli servant de face de guidage 11 comportant une zone de contact avec le patin 5 de frein exerçant un effort élastique F constant et comportant des moyens d'amortissements élastiques 13 sur toutes la face de la glissière susceptible d'être en contacte avec la chape 3 et réalisé dans une tôle recouverte du dit moyen d'amortissement sur une seule de ses faces caractérisé en ce que la face amortissante comporte des zones contacte avec la chape 3 et la glissière 7 et que la dite glissière comporte l'aile élastique 10 en contact avec le patin et possède un repli 11 de manière a ce que face comportant les moyens d'amortissement 13 soit opposé a une zone d'appui sur le patin 5.

Le repli 11 formant la zone de contact de l'aile élastique 10 de la glissière 7 possède une forme arrondie pour l'amélioration des frottements entre le patin et la dite aile cette forme arrondie 11 possédant avantageusement un rayon de courbure compris entre 0.5mm et 15mm et de manière encore plus avantageuse un rayon compris entre 1 mm et 5mm.

Effectivement ce repli sur l'aile élastique permet à la matière servant de moyen amortissant de ne pas ce retrouver en contacte avec le patin et donc que le coefficient de friction entre le patin et la glissière soit sensiblement égal sur toute les zones de contactes entre le patin et la glissière.

La face amortissante comportant des moyens d'amortissements élastiques qui sont avantageusement réalisés en matière élastomère.

Selon un autre moyen de réalisation, la glissière 20 est réalisée en tôle revêtue découpé et pliée, les couches 22 21 23 pouvant être de matières différentes par exemple polytétrafluoroéthylène / métal / caoutchouc. Cela permet d'ajuster les capacités d'amortissements et de friction de la glissière en fonction des applications sur les véhicules. Effectivement ces glissières on un effet sur les efforts de coulissement du patin et le fait de pouvoir augmenter ou de diminuer le coefficient de friction entre la glissière et le patin permet de réduire le couple résiduel de frein à disque.

La zone de contact 11 de l'aile élastique 10 de la glissière 7 possède une forme arrondie pour l'amélioration des frottements entre le patin et la dite aile.

Cette forme arrondie possédant avantageusement un rayon compris entre 0.5mm et 15mm et de manière encore plus avantageuse un rayon compris entre 1 mm et 5mm.

Une autre caractéristique avantageuse, est que la glissière 7 est fixée à la chape fixe 3 par des moyens de fixation élastique 15 par emboîtement de formes complémentaires et deux ailes 14 et 14b situé de part et d'autre de lame élastique 10.

### NOMENCLATURE DES ELEMENTS PRINCIPAUX

1 frein a disque
2 étrier
3 chape
4 élément de serrage
5 patin
6 surface de patin
7 glissière
8 disque
9 oreille de patin
10 aile déformable /ressort
11 face de guidage
12 ressort d'oreille de patin t
13 moyen d'amortissement
14 languette de fixation 14b languette de fixation
15 languette moyens de fixation élastique
16 face de fond de glissière
17 face latérale de glissière
18 face latérale de glissière
19 face de contacte glissière patin
20 glissière selon un autre moyen de réalisation
21 couche métallique
22 couche matière
23 couche matière
24 plot de chape

## Revendications

1. Glissière pour frein à disque glissière du type défini par un corps à section en forme de U sensiblement rectangulaire pour se placer dans le logement et se poursuivant par, une surface d'appui avant venant contre la surface avant d'un plot et portant deux languettes (14) et (14 b) pour former des butées latérales venant de part et d'autre du plot, et un ressort amortisseur (10) formé par une aile en épingle à cheveux revenant vers l'avant pour s'appuyer élastiquement contre le côté du patin (5) au-dessus de l'oreille (9), et par une surface d'appui avant intérieure venant contre la surface intérieure du bras et recevant la face du patin sous l'oreille, le corps ayant une surface radiale extérieure venant contre la surface supérieure du logement, suivi d'un fond (16) venant contre le fond du logement et une surface radiale intérieure munie d'une languette (15) de verrouillage pour s'appuyer et s'accrocher contre la surface inférieur du logement. comportant une aile élastiquement déformable (10) et une face de guidage (11) comportant une zone de contact avec le patin (5) de frein exerçant un effort élastique (F) constant et comportant des moyens d'amortissements élastiques (13) sur toutes la face de la glissière susceptible d'être en contacte avec la chape (3) et réalisé dans une tôle recouverte du dit moyen d'amortissement sur une seule de ses faces **caractérisé en ce que** la face amortissante comporte des zones contacte avec la chape (3) et la glissière (7) et que la dite glissière comporte l'aile élastique (10) en contact avec le patin et possède un repli (11) de manière a ce que face comportant les moyens d'amortissement (13) soit opposé a une zone d'appui sur le patin (5).

2. Glissière pour frein à disque selon la revendication 1, **caractérisé en ce que** les moyens d'amortissements élastiques sont avantageusement réalisés en matière élastomère.

3. Glissière pour frein à disque selon la revendication 1 **caractérisé en ce que** les moyens d'amortissements élastiques sont avantageusement réalisés en matière élastomère d'épaisseur comprise entre 0.3mm et 1 mm.

4. Glissière pour frein à disque glissière Frein à selon les revendications 1 et 2 **caractérisé en ce que** le repli (11) formant la zone de contact de l'aile élastique (10) de la glissière (7) possède une forme arrondie pour l'amélioration des frottements entre le patin et la dite aile cette forme arrondie (11) possédant avantageusement un rayon compris entre 0.5mm et 15mm et de manière encore plus avantageuse un rayon compris entre 1mm et 5mm.

5. Glissière pour frein à disque (1) selon l'une quelconque des revendications précédentes, **caractérisé en ce que** la partie métallique de la glissière est réalisée de manière préférentielle dans une tôle d'acier inox d'épaisseur compris entre 0.3mm et 1 mm.

6. Glissière pour frein à disque glissière Frein à selon la revendication 1, **caractérisé en ce que** elle est composée d'au moins deux matières dont une métallique et est composée de trois couches (21), (22), (23) dont la matière métallique ce trouve au milieu entre les couches (22) et (23).

7. Frein à disque (1) munie d'au moins une glissière selon les revendications 1 à 6 **caractérisé en ce que** la face amortissante de la glissière comporte des zones contacte avec la chape (3) et la glissière et que la dite glissière comporte une aile élastique (10) en contact avec le patin et possède un repli (11) de manière a ce que face comportant les moyens d'amortissement (13) soit opposé a une zone d'appui sur le patin (5).

## Patentansprüche

1. Gleitführung für eine Scheibenbremse von der Art, die durch einen Körper mit im Wesentlichen rechtwinkligem U-förmigem Querschnitt, um sich in die Aufnahme einzufügen, und sich fortsetzend durch eine vordere Auflagefläche, die gegen die Vorderfläche eines Blocks kommt und zwei Zungen (14) und (14b) trägt, um seitliche Anschläge zu bilden, die zu beiden Seiten des Blocks kommen, und eine Dämpfungsfeder (10), die von einem haarnadelförmigen Flügel gebildet wird, der nach vorne zurückkommt, um sich elastisch gegen die Seite des Bremsbelagträgers (5) oberhalb des Ohrs (9) aufzulegen, und durch eine untere vordere Auflagefläche definiert wird, die gegen die Innenfläche des Arms kommt und die Seite des Bremsbelagträgers unter dem Ohr aufnimmt, wobei der Körper eine äußere radiale Fläche, die gegen die Oberfläche der Aufnahme kommt, gefolgt von einem Boden (16), der gegen den Boden der Aufnahme kommt, und eine innere radiale Fläche hat, die mit einer Verriegelungszunge (15) versehen ist, um sich gegen die untere Fläche der Aufnahme anzulegen und festzuhaken, die einen elastisch verformbaren Flügel (10) und eine Führungsseite (11) aufweist, die eine Kontaktzone mit dem Bremsbelagträger (5) aufweist, die eine konstante elastische Kraft (F) ausübt, und elastische Dämpfungseinrichtungen (13) auf der ganzen Seite der Gleitführung aufweist, die mit dem Gabelkopf (3) in Kontakt sein kann und hergestellt aus einem Blech bedeckt mit der Dämpfungseinrichtung auf nur einer ihrer Seiten, **dadurch gekennzeichnet, dass** die Dämpfungsseite Kontaktzonen mit dem Gabelkopf (3) und der Gleitführung (7) aufweist, und dass die Gleitführung den elastischen Flügel (10) in Kontakt mit dem Bremsbelagträger aufweist, und einen Umschlag (11) aufweist, damit die die Dämpfungseinrichtungen (13) aufweisende Seite einer Auflagezone auf dem Bremsbelagträger (5) gegenüberliegt.

2. Gleitführung für eine Scheibenbremse nach Anspruch 1, **dadurch gekennzeichnet, dass** die elastischen Dämpfungseinrichtungen vorteilhafterweise aus Elastomermaterial hergestellt werden.

3. Gleitführung für eine Scheibenbremse nach Anspruch 1, **dadurch gekennzeichnet, dass** die elastischen Dämpfungseinrichtungen vorteilhafterweise aus Elastomermaterial einer Dicke hergestellt werden, die zwischen 0,3 mm und 1 mm liegt.

4. Gleitführung für eine Scheibenbremse Gleitführung einer Bremse mit nach den Ansprüchen 1 und 2, **dadurch gekennzeichnet, dass** der die Kontaktzone des elastischen Flügels (10) der Gleitführung (7) bildende Umschlag (11) eine abgerundete Form zur Verbesserung der Reibungen zwischen dem Bremsbelagträger und dem Flügel besitzt, wobei diese abgerundete Form (11) vorteilhafterweise einen Radius zwischen 0,5 mm und 15 mm und noch vorteilhafter einen Radius zwischen 1 mm und 5 mm besitzt.

5. Gleitführung für eine Scheibenbremse (1) nach einem der vorhergehenden Ansprüche, **dadurch gekennzeichnet, dass** der metallische Teil der Gleitführung vorzugsweise aus einem nichtrostenden Stahlblech einer Dicke zwischen 0,3 mm und 1 mm hergestellt wird.

6. Gleitführung für eine Scheibenbremse Gleitführung einer Bremse mit nach Anspruch 1, **dadurch gekennzeichnet, dass** sie aus mindestens zwei Materialien besteht, von denen eines metallisch ist, und aus drei Schichten (21), (22), (23) besteht, deren metallisches Material sich in der Mitte zwischen den Schichten (22) und (23) befindet.

7. Scheibenbremse (1), die mit mindestens einer Gleitführung nach den Ansprüchen 1 bis 6 versehen ist, **dadurch gekennzeichnet, dass** die dämpfende Seite der Gleitführung Kontaktzonen mit dem Gabelkopf (3) und der Gleitführung aufweist, und dass die Gleitführung einen elastischen Flügel (10) in Kontakt mit dem Bremsbelagträger aufweist und einen Umschlag (11) besitzt, so dass die die Dämpfungseinrichtungen (13) aufweisende Seite einer Auflagezone auf dem Bremsbelagträger (5) gegenüberliegt.

## Claims

1. Guideway for a disk brake, the guideway being of the type defined by a body of substantially rectangular, U-shaped cross section in order to move in the housing and continuing into a front support surface which comes to rest against the front surface of a stud and carries two tabs (14) and (14b) to form lateral stops arising from either side of the stud, and a damper spring (10) formed by a hairpin leg which returns to the front to rest elastically against the side of the pad (5) above the lug (9), and by an inner front support surface which comes to rest against the inner surface of the arm and receives the face of the pad below the lug, the body having an outer radial surface which comes to rest against the upper surface of the housing, followed by a base (16) which comes to rest against the base of the housing, and an inner radial surface equipped with a locking tab (15) to rest and hook against the lower surface of the housing, comprising an elastically deformable leg (10) and a guide face (11) comprising a contact zone with the brake pad (5), and exerting a constant elastic force (F), and comprising elastic damping means (13) on all faces of the guideway liable to be in contact with the carrier (3), and made from a metal sheet covered with said damping means on just one of its faces, **characterized in that** the damping face comprises contact zones with the carrier (3) and the guideway (7), and that said guideway comprises the elastic leg (10) in contact with the pad, and has a bent-over portion (11) such that the face comprising the damping means (13) lies opposite a support zone on the pad (5).

2. Guideway for a disk brake according to Claim 1, **characterized in that** the elastic damping means are advantageously made from elastomer material.

3. Guideway for a disk brake according to Claim 1, **characterized in that** the elastic damping means are advantageously made from elastomer material of a thickness between 0.3 mm and 1 mm.

4. Guideway for a disk brake brake guideway with according to Claims 1 and 2, **characterized in that** the bent-over portion (11) forming the contact zone of the elastic leg (10) of the guideway (7) has a rounded form to improve friction between the pad and said leg, and this rounded form (11) advantageously has a radius of between 0.5 mm and 15 mm, and even more advantageously a radius of between 1 mm and 5 mm.

5. Guideway for a disk brake (1) according to any of the preceding claims, **characterized in that** the metal part of the guideway is preferably made from a stainless steel sheet of thickness between 0.3 mm and 1 mm.

6. Guideway for a disk brake brake guideway with according to Claim 1, **characterized in that** it comprises at least two materials, one of which is metallic, and is composed of three layers (21), (22), (23), the metal material of which lies in the middle between the layers (22) and (23).

7. Brake disk (1) equipped with at least one guideway according to any of Claims 1 to 6, **characterized in that** the damping face of the guideway comprises contact zones with the carrier (3) and the guideway, and that said guideway comprises an elastic leg (10) in contact with the pad and has a bent-over portion (11) such that the face comprising the damping means (13) lies opposite a support zone on the pad (5).
